Europäisches Patentamt

**European Patent Office**

Office européen des brevets

(11) Publication number: **0 095 525**
A2

(12) # EUROPEAN PATENT APPLICATION

(21) Application number: **82108775.6**

(22) Date of filing: **18.09.82**

(51) Int. Cl.³: **H 02 H 7/08, H 01 H 61/00**

(30) Priority: **01.10.81 TR 89778/81**

(43) Date of publication of application: **07.12.83**
**Bulletin 83/49**

(84) Designated Contracting States: **AT BE CH DE FR GB IT LI LU NL SE**

(71) Applicant: **Gülüm, Fahir, Köybasi caddesi No. 133, Yeniköy Istanbul (TR)**

(72) Inventor: **Gülüm, Fahir, Köybasi caddesi No. 133, Yeniköy Istanbul (TR)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

(54) **An electronic relay and protector for single phase hermetic compressors.**

(57) The present day Current and Potential relays used in conjunction with the thermic protectors on hermetic refrigeration compressors cannot fully meet the requirements for a complete protection and operation. Due to large variations of the voltage conditions and refrigeration demands a great many compressors are burned or damaged yearly.

Therefore, it is a general opinion that today's classical "Current and Potential" relays with their "bi-metallic" overloads cannot cope with the problems of the field demands.

In the new design:

1. If the compressor starts properly and attains about 80% of its synchronous speed a low current signal is picked by and electronic circuit of a triac and thus the heavy current path permits the line current of the compressor to continue to pass.

2. In the absence of this singal, no proper start condition, a miniature low current protector is rapidly heated by a PTC (Positiv Temperature Coefficient Thermistor) controlling the start winding and immediately cuts the heavy line current by acting on the triac and thus stopping the compressor.

3. Due to the heat of the PTC this miniature protector remains open for 4–5 minutes thus allowing the compressor motor to restart under the best of refrigeration conditions.

GRÜNECKER, KINKELDEY, STOCKMAIR & PARTNER

PATENTANWÄLTE
EUROPEAN PATENT ATTORNEYS

A. GRÜNECKER, DIPL ING
DR H KINKELDEY, DIPL ING
DR W STOCKMAIR, DIPL ING AE E (CALTECH)
DR K SCHUMANN, DIPL PHYS
P. H JAKOB, DIPL ING
DR G BEZOLD, DIPL CHEM
W MEISTER, DIPL ING
H HILGERS, DIPL ING
DR H MEYER-PLATH, DIPL ING

8000 MÜNCHEN 22
MAXIMILIANSTRASSE 43

0095525

August 1, 1983

EP 843-505/th

European Patent Application No. 82 108 775.6

Applicant:  Gülüm, Fahir

AN ELECTRONIC RELAY AND PROTECTOR FOR SINGLE PHASE HERMETIC COMPRESSORS

The present day Current and Potential relays used in conjunction with the thermic protectors on hermetic refrigeration compressors can not fully meet the requirements for a complete protection and operation.  Due to large variations of the voltage conditions and refrigeration demands a great many compressors are burned or damaged yearly.

Therefore, it is a general opinion that today's classical "Current and Potential" relays with their "bi-metallic" overloads can not cope with the problems of the field demands.

In the new design:

1- If the compressor starts properly and attains about 80% of its synchronous speed a low current signal is picked by and electronic circuit of a triac and thus the heavy current path permits the line current of the compressor to <u>continue</u> to pass.

2- In the absence of this signal, no proper start condition, a miniature low current protector is rapidly heated by a PTC (Positiv Temperature Coefficient Thermistor) controlling the start winding and immediately cuts the heavy line current by acting on the triac and thus stopping the compressor.

3- Due to the heat of the PTC this miniature protector remains open for 4-5 minutes thus allowing the compressor motor to restart under the best of refrigeration conditions.

<u>Thus the advantages are</u>:

1- A large field of application for a single type of relay from 1/12 to 1 1/2 HP compressors.

2- Due to the use of PTC it is basically a potential relay keeping the start winding closed at the starts under any voltage conditions. This is not being the case with the current relays.

3- It gives a much longer "dwell" time during starts for the start winding but has a positiv safe opening feature for both winding during stalls.

4- At the low and high voltages no flickering or chattering contacts at all.

5- No cold or hot motor problems with the high and low voltages respectively.

6- Absolutely no contacts to pit or to get stuck.

7- Independent hanging position.

8- It is actually a three-in-one application, being:

a) A relay

b) A protector

c) An anti-short-cycler

9- No appreciable voltage drop on the main winding.

10- It is definitely an energy saver.  By eliminating the quick on and off trials of a hard start compressor it keeps the windings cool and the refrigeration internal pressure balanced for the no load condition starts.

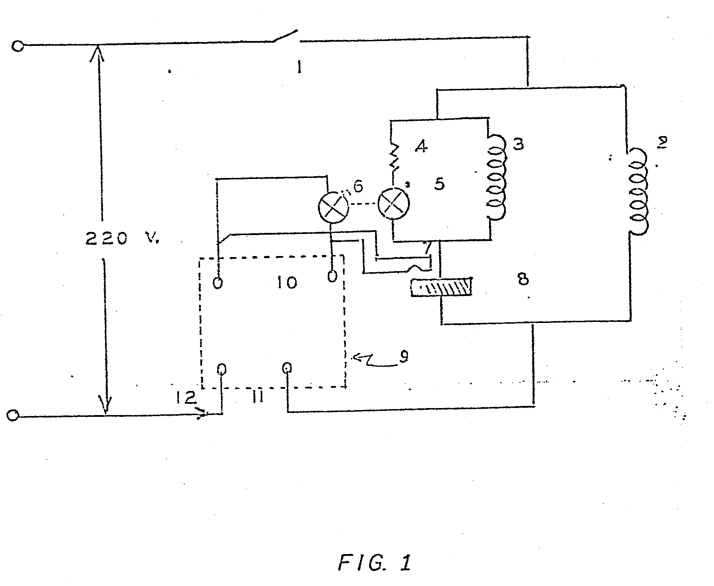

CLAIMS:

1- Control of large line currents (12) by weak signal (6).

2- Capacity of the triac (11) is the only limiting factor.

3- Use of the heat of the PTC (8) for slow cycling.

4- Use of the back E.M.F. as opto-electronic control (5), (6) for safe starts.

FIG. 1